# EUROPEAN PATENT APPLICATION

(11) **EP 1 900 289 A1**
(43) Date of publication of application: **19.03.2008**
(21) Application number: 06019500.5
(22) Date of filing: 18.09.2006
(51) Int. Cl.: A23L 1/01, A23L 1/217

(54) **Low fat potato chips and method for their production**

(71) Applicant: Kraft Foods R & D, Inc. Zweigniederlassung München, 81737 München (DE)
(72) Inventor: Andersson, Per Anders, 42354 Gothenburg (SE); Mårtensson, Therese Sandra, 41257 Vastra Gotaland (SE)
(74) Representative: HOFFMANN EITLE

(57) **Abstract**

A process for producing fried potato products having a low fat content, for instance, of less than 19 % by weight based on the weight of the potato product after frying and de-oiling, is provided which comprises the steps of providing potato slices, blanching the potato slices with a solution comprising divalent cations at a temperature of 50 °C or more, frying the potato slices, and de-oiling the fried potato slices, preferably by applying superheated steam. Furthermore, a fried potato product obtainable by said process is disclosed.

## Description

### Technical Field of the Invention

The present invention is directed to low fat potato chips, such as potato chips having a reduced fat content, and a process for manufacturing the same involving a blanching step, a frying step and an oil-removing step.

### Background of the Invention

All commercialized fried reduced fat potato chips in the last 20 to 25 years have been produced using the same technology. Specifically, superheated steam is used to blow off the surface oil of the fried product. Over the years, the oil-removing procedures, specifically those using superheated steam, have been improved, for instance by optimizing the chamber used for the treatment with superheated steam.

With the current improved superheated steam chambers, potato chips having less fat than regular potato chips can be produced. Typically, a fat content of 21 to 24 % by weight can be achieved in contrast to 33 to 38 % by weight of fat content in potato chips that have been produced without a de-oiling step using superheated steam, based on the total weight of the product after seasoning.

For instance, GB 1,519,049 discloses potato chips produced from potato slices having a thickness of 1.4 mm that have a fat content of the finished product of 22.6 to 24.0 %. They are produced by passing the slices without any pre-treatment through a deep-frying pan having two temperature zones from 135 to 150 °C and 160 °C or above, respectively. Subsequently, the deep-fried slices are treated with superheated steam at a minimum temperature of 110 °C without contact with the atmosphere.

US 4,721,625 discloses a process for producing a potato chip product having an oil content of 21 to 26 % by weight by partially frying potato slices in oil and removing the oil from the surface by means of jets of saturated steam in an oxygen-free atmosphere. Finally, the moisture content of the chips is reduced to the desired level by applying superheated steam. Optionally, a brief microwave treatment is applied as well.

US 4,537,786 discloses a process for producing low oil potato chips by frying potato slices at a relatively low temperature and, after removal of the fried potato slices from the frying medium, contacting the potato slices for 1 to 10 minutes with a stream of hot air. The oil content of the chips is in the range of from 22.8 to 29.2 %.

US 4,933,199 discloses a process for the continuous preparation of low oil potato chips comprising the steps of partially frying the potato slices, de-oiling the slices to an oil content of less than 25 % by weight based on the total weight of the de-oiled slices by means of superheated steam in a reduced oxygen environment and dehydrating the potato slices to the desired moisture content. The oil content of the chips is 19.8 % by weight or more.

US 5,799,570 discloses an apparatus and process for the extraction of oil from fried food products such as potato chips. The oil is removed by means of organic solvents such as hexane and petroleum ether, acetone, ether, liquid esters of low alcohols with short-chain fatty acids, and lower alcohols, especially ethanol. Neither the oil content nor the content of these potentially precarious solvents in the finished products are disclosed.

US 5,891,494 discloses a method for preparing reduced-fat sliced potato products by coating the slices with an emulsion containing a starchy material, oil and salt after treating the slices with superheated steam and before the slices are baked by the consumer. In the manufacture of potato chips (crisps), a frying step is not carried out. Therefore, a taste and texture different from fried potato chips is obtained. '

US 5,059,435 relates to a process for preparing frozen potato products that do not clump on deep-frying in hot oil and which aims to retain a moisture content typical for French fries (about 30-40 %). This is accomplished by subjecting the potato slices having a thickness of 9/32 inch (about 7 mm) to a first heating step, a blanching step and a subsequent step of immersing the slices into a solution containing sodium acid pyrophosphate, sodium chloride and dextrose. The slices are then dried, coated with an aqueous starch slurry and parfried. The slices are frozen to be stored and finally finished by frying. An oil content of about 13 % is disclosed for refried slices.

In view of the above, it is an object of the present invention to provide a process for producing potato chips having a reduced fat content such as less than 19 % by weight and having a moisture content of 5 % by weight or less, based on the total weight of the product prior to seasoning, an excellent taste, a crunchier texture and a less dry aftertaste, which process can be applied to a standard chips manufacturing line equipped with a steam de-oiling unit without requiring high investment and while maintaining the nominal capacity of the frying line.

### Summary of the Invention

The above object is solved by the present invention which, in a first aspect, provides a process for producing fried potato products comprising the steps of
a) providing potato slices,
b) blanching the potato slices with a solution comprising divalent cations at a temperature of 40 °C or more,
c) frying the potato slices,
d) de-oiling the fried potato slices, preferably by applying superheated steam.

In a further aspect of the invention, a potato product is provided that is obtainable by said process and has a fat content of less than 19 % by weight and a moisture content of less than 5 % by weight, based on the weight of the potato product after frying and de-oiling and prior to an optional application of seasoning.

Following below, all percentages are by weight based on the fried and de-oiled product prior to an optional application of seasoning, unless otherwise stated.

In relation to the present invention, the terms "fat content" and "oil content" are used interchangeably.

Preferred embodiments will become evident from the attached claims and the detailed description.

### Detailed Description of the Invention

### Process

The process according to the invention allows the production of fried potato products that have a fat content significantly lower than fried potato products according to the prior art. For instance, according to the prior art, the fat content of marketed potato chips usually is 32 to 38 % by weight. The fat content of products obtainable by the process according to the present invention is lower than 19 % by weight, or lower than 18 % by weight, or lower than 17 % by weight, preferably in the range of 14 to 16 % by weight. The moisture content of the product is usually 5 % by weight or less, or less than 4 % by weight, preferably in the range of 1 to 2.5 % by weight or more preferably 1.5 to 2.0 % by weight.

The process imparts an excellent taste, a crunchier texture and a less dry aftertaste to the products.

### Providing potato slices

The process according to the present invention is suitable for producing fried potato products having any conceivable shape. The potato products preferably have the shape of slices. However, within the meaning of the present invention, the term "potato slices" is intended to encompass shapes such as sticks, etc. The slices can have a substantially flat geometry, a substantially ridged geometry or a substantially wavy geometry. The thickness of the slices can generally be 0.8 to 3.0 mm, preferably 1.2 to 2.0 mm, most preferably 1.5 to 1.7 mm.

Generally, all potato varieties commonly known as chipping varieties are suitable as starting material for the process. Such varieties are known to the skilled person and usually have a reducing sugar content below 0.30 % by weight in general, preferably below 0.15 % and most preferably 0.05 to 0.10 % by weight. The dry matter content preferably is in the range from 20 to 25 % in general, preferably 23 to 25 %.

Prior to the blanching step the surface starch is preferably washed off from the potato slices.

### Blanching

In relation to the present invention, the term "blanching" describes a treatment step wherein the potato slices are plunged into a hot aqueous solution and removed after a certain time interval.

The potato slices are blanched with an aqueous solution containing divalent cations. As the present invention is directed to food processing, it is understood that said divalent cations and the corresponding counterions present in said aqueous solution are compatible with the metabolism of human beings and do not have adverse effects on human health, i.e. they are food graded divalent cations with corresponding counter ions. Examples of suitable divalent cations are alkaline earth metal cations, such as Mg²⁺ and Ca²⁺, preferably Ca²⁺. A combination of two or more different divalent cations may be used.

The corresponding counterions may be selected from, for instance, chloride, fluoride, bromide, sulfate, carbonate, and hydrogencarbonate, anions derived from carboxylic acids, such as citrate, ascorbate, acetate, propionate, and benzoate. A usual and preferred counterion is chloride. A preferred combination of divalent cation and counterion is represented by calcium chloride, i.e. CaCl₂. A combination of two or more different salts may be used.

The concentration of said divalent cation in said aqueous solution, calculated in terms of CaCl₂, is generally 0.05 to 2.0 % by weight, preferably 0.15 to 0.7 % by weight, more preferably 0.30 to 0.50 % by weight, most preferably 0.35 to 0.45 % by weight. If a divalent cation is used in a form different from CaCl₂, the weight percentages given above are converted so as to correspond to an equimolar amount of the divalent cation.

Blanching is generally carried out at a temperature of from 40 to 100 °C, preferably 50 or 55 to 95 °C, more preferably 60 or 65 to 90 °C, most preferably 70 to 85 °C.

The potato slices are treated with the aqueous solution by immersion, wherein the solution is preferably pre-heated to the blanching temperature.

The temperature and divalent cation concentration are preferably kept constant during the treatment. The dwell time of the potato slices in the blanching solution is in the range of from 0.1 to 5 minutes, preferably 0.5 to 3 minutes, more preferably 1 to 2 minutes, most preferably 1.5 to 2 minutes.

Typically, a longer dwell time is selected if the blanching is carried out at a lower temperature, whereas a shorter dwell time is selected if the blanching is carried out at a higher temperature. Also, a higher divalent cation concentration will require shorter dwell times and lower temperatures.

At a temperature of 70 to 80 °C, the preferred dwell time is 1.5 to 2 minutes at a divalent cation concentration of 0.3 to 0.5 %, but it is to be understood that the process parameters may depend on other aspects such as potato variety, its reducing sugar content and dry matter content.

Prior to blanching, the potato slices typically have a dry matter content of 15 to 25 %, preferably 18 to 24 %, more preferably 20 to 24 %, most preferably 22 to 24 %. The divalent cation concentration typically is 0.01 to 0.5 % by weight, preferably 0.05 to 0.20 % by weight, more preferably 0.10 to 0.15 % by weight, most preferably 0.12 to 0.14 %.

It is assumed that by the treatment with divalent cations the intercellular forces are improved, i.e. the cells are "glued" together. Presumably, divalent cations can bind free carboxyl groups on adjacent pectin polymers and link them, thereby creating a more stable three-dimensional network and imparting additional firmness to the tissue. Thus, less degradation of cell wall material and middle lamella occurs if the potato slices are blanched with a solution containing divalent cations, for instance calcium cations. The presence of divalent cations also has an impact on starch gelation. Divalent cations seem to retard the swelling and rupture of starch granules, allowing the leakage of amylose, but not amylopectin, out of the starch granules. The amylose chains will then link to the cell walls and may also improve the cell wall strength and thereby cause less holes and cracks during the frying process.

### Frying

In relation to the present invention, the term "frying" is directed to completely or partially submerging the potato slices in a frying medium, such as hot oil or fat. In the art, this method is also referred to as "deep frying".

Any device suitable for frying potato products can be employed in the process according to the invention. A single-zone continuous fryer and a multi-zone continuous fryer are preferred, wherein the multi-zone continuous fryer is more preferred.

Examples of the frying medium include palmolein, sunflower oil, high oleic acid sunflower oil, medium oleic acid sunflower oil, corn oil, soybean oil, partially hydrogenated soybean oil, cottonseed oil, peanut oil, low euricic acid rapeseed (canola) oil and combinations thereof, but other frying media are also conceivable.

The terms "oil" and "frying medium" are used interchangeably in relation to the present invention, although the frying medium is not necessarily an oil.

Preferably, the temperature of the frying medium is controlled such that a temperature profile is applied to the potato slices as they pass the frying medium. The inlet temperature of the frying medium is typically not higher than 195 °C, preferably not higher than 180 °C, more preferably not higher than 170 °C, most preferably not higher than 165 °C. The outlet temperature is typically between 110 and 170 °C, preferably 145 and 160 °C, more preferably 150 and 155 °C. However, as is evident to the skilled person, the temperature of the frying medium must be sufficiently high to induce evaporation of the water contained in the potato slice at such a rate that a steam blanket surrounding the potato slice and impeding the intrusion of the frying medium is formed. This is usually accomplished if the temperature is kept above 110°C until the oil removing medium is applied.

After frying and before the oil removal, the moisture content of the potato slices is preferably between 3 and 15 %, preferably 5 and 12 %, more preferably 8 and 10 %. If the slices are fried to a moisture content lower than 5 % it may be difficult to achieve the desired oil and moisture levels in the final product without non-enzymatic browning. If the moisture content of the potato slices exceeds 15 % by weight, it may be difficult to achieve the desired moisture and oil levels simultaneously without development of off-flavors.

The oil reduction effect is even more pronounced if the inlet temperature is kept in the range of 135 to 155 °C instead of the temperatures mentioned above, but the line capacity will then drop due to a longer time required for frying.

### De-oiling

In relation to the present invention, the term "de-oiling" is directed to removing the frying medium at least partially from the fried potato slices after these have been removed from the frying medium.

The major part of the oil contained in potato chips is not absorbed during the frying process. The water evaporating from the potato slices forms a steam blanket around the potato slices that prevents oil absorption during the frying process. However, when the potato slices are removed from the frying medium, the steam inside the slices condenses due to the temperature drop and creates an under-pressure that forces the oil present on the surface of the fried potato slices into the pores that have been formed during the frying process.

Potato chips with a reduced oil content can be produced in commercial scale by blowing off the surface oil from the potato slices before the oil is absorbed by the potato slices. Typically, the oil-removing medium is applied before the steam inside the slices condenses and creates an under-pressure inside the slices.

As a result, the temperature of the slices has to be kept at a temperature sufficiently high to prevent condensing of the steam under the pressure conditions given until the oil-removing medium is applied. Otherwise, the oil is likely to be forced into the product and a low fat content cannot be accomplished. For example, the fried potato slices may be kept at a temperature of 110 °C or higher at ambient pressure.

According to the present invention, a stream of superheated steam, saturated steam, a hot gas such as air or nitrogen can be employed as the oil-removing medium, with superheated steam being preferred.

Typically, the temperature of the oil-removing medium is higher than 110 °C at ambient pressure in order to fulfill the above-stated requirements.

Control of the de-oiling and dehydrating process can be achieved by adjusting the temperature of the superheated steam, the blower fan speed and the resident time in the de-oiling unit. The optimum parameters depend on chipping variety, dry matter content of the potato, slice thickness, process parameters of the blanching treatment, etc. In general, the temperature of the superheated steam is in the range of 150 to 190 °C, more preferably 165 to 175 °C, and the residence time is between 30 and 120 seconds, more preferably 45 and 75 seconds.

If the temperature of the oil-removing medium is lower than 150 °C a long exposure of the fried potato slices to said oil-removing medium may become necessary which may result in undesirable non-enzymatic browning of the fried potato slices. An exemplary de-oiling procedure is disclosed in the patent application GB 1,519,049, for instance.

### Potato product

The fried potato product obtainable by the process described herein is characterized by its fat content and its moisture content. Moreover, it may be characterized by its content of divalent cation.

The fat content of the fried potato product is 19 % by weight or less, preferably 18 % by weight or less, more preferably 14 to 18 % by weight, most preferably in the range from 14 to 16 % by weight.

The divalent ion concentration of the product after the de-oiling and drying step, in terms of CaCl₂, is preferably 0.1 to 0.6 % by weight, more preferably 0.2 to 0.5 % by weight, most preferably 0.35 to 0.45 %.

The moisture content of the product after the de-oiling step preferably is in the range of 5 % by weight or less, preferably 1.0 to 2.5 % by weight, more preferably 1.5 to 2.0 % by weight or less.

In general, fried potato products having a low fat content tend to have a dry aftertaste. The potato product obtainable by the process described herein, however, has a pleasant salty aftertaste presumably owing to the blanching step according to the present invention. Furthermore, the texture of the potato products according to the present invention is crunchier, presumably also due to the improved intercellular forces mentioned hereinabove.

Hence, the present invention provides a method for producing fried potato products having improved properties, viz.
a) a fat content lower than known from the prior art while the organoleptic properties, such as taste and crunchiness, are improved or at least not deteriorated; or
b) at content essentially equal to that known from the prior art while the organoleptic properties, such as taste and crunchiness, are improved.

### Examples

The fat content of the fried potato products is analyzed according to NKML (Nordic Method Committee Foods) 131.

The following examples are provided to more fully illustrate the invention and are not to be construed as a limitation thereof. The fat content of the final potato chips is dependent on the following factors: dry matter content of potato, slice thickness, cation concentration in blancher, resident time in blancher, temperature in blancher, frying temperature profile, oil quality, moisture content after frying, temperature of superheated steam, speed of fan for circulation of superheated steam, resident time in de-oiling unit, dosage and fat content of seasoning. As a result, there are many options for reducing the fat content and optimize the organoleptic properties.

### Example 1

Potato chips with 50 to 55 % less fat than regular products and excellent organoleptic properties were prepared by washing, de-stoning, peeling, washing and slicing potatoes with a dry matter content of 24 %. The slices having a thickness of 1.6 to 1.7 mm were blanched in a 0.45 % calcium chloride solution at 75 °C for 2 minutes. A multiflow fryer was used with the following temperature zones: zone 1 = 136°C, zone 2 = 147 °C, zone 3 = 149 °C, zone 4 = 144 °C and zone 5 = 150 °C, while the inlet temperature was 159 °C. The superheated steam used for de-oiling had a temperature of 175 °C, the fan speed was 55 Hz and the resident time in de-oiling unit was set to 35 seconds. The potato chips had a fat content of 17 % by weight prior to application of seasoning and 16 % after application of seasoning.

In a test with Swedish consumers, the product achieved higher overall liking than regular potato chips and the improved crunchy texture was the strongest driver for the high overall liking scores.

### Example 2

The fat content achieved in Example 1 could be further reduced by 1-2 % by increasing the slice thickness to 1.7 to 1.8 mm, but the organoleptic properties of the product obtained in Example 1 performed better in the consumer test.

### Example 3

The fat content could be further reduced by 1-2 % by increasing the temperature of the superheated steam to 180 °C, but the organoleptic properties of the product obtained in Example 1 performed better in the consumers test.

## Claims

1. A process for producing fried potato products comprising the steps of
a) providing potato slices,
b) blanching the potato slices with a solution comprising divalent cations at a temperature of 40 °C or more,
c) frying the potato slices,
d) de-oiling the fried potato slices, preferably by applying superheated steam.

2. The process according to claim 1, wherein the temperature in step b) is 55 to 95 °C, more preferably 65 to 90 °C, most preferably 70 to 85 °C.

3. The process according to claims 1 or 2, wherein the divalent cations are calcium ions or magnesium ions.

4. The process according to any of claims 1 to 3, wherein the solution is an aqueous solution containing CaCl₂.

5. The process according to any of claims 1 to 4, wherein the concentration of the divalent cations in the solution, calculated in terms of CaCl₂, is 0.05 to 2.0 % by weight, preferably 0.15 to 0.7 % by weight, more preferably 0.3 to 0.5% by weight, most preferably 0.35 to 0.45 % by weight.

6. The process according to any of claims 1 to 5, wherein step b) is carried out for 0.1 to 5 minutes, preferably 0.5 to 3 minutes, more preferably 1 to 2 minutes, most preferably 1.5 to 2 minutes.

7. A fried potato product obtainable by a process as defined in any of claims 1 to 6.

8. The fried potato product according to claim 7 having a fat content of 19 % by weight or less and a moisture content of 5 % by weight or less.
